(19) Europäisches Patentamt
European Patent Office
Office européen des brevets

(11) **EP 4 663 614 A1**

(12) **EUROPEAN PATENT APPLICATION**
published in accordance with Art. 153(4) EPC

(43) Date of publication:
**17.12.2025   Bulletin 2025/51**

(21) Application number: **24753249.2**

(22) Date of filing: **02.02.2024**

(51) International Patent Classification (IPC):
***C03C 3/091*** (2006.01)     ***A61J 1/05*** (2006.01)
***C03C 4/20*** (2006.01)

(52) Cooperative Patent Classification (CPC):
**A61J 1/05; C03C 3/091; C03C 4/20**

(86) International application number:
**PCT/JP2024/003433**

(87) International publication number:
**WO 2024/166806 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **06.02.2023   JP 2023015897**

(71) Applicant: **Nippon Electric Glass Co., Ltd.
Otsu-shi, Shiga 520-8639 (JP)**

(72) Inventor: **ARAI, Satoshi
Otsu-shi, Shiga 520-8639 (JP)**

(74) Representative: **Henkel & Partner mbB
Patentanwaltskanzlei, Rechtsanwaltskanzlei
Maximiliansplatz 21
80333 München (DE)**

(54) **GLASS FOR PHARMACEUTICAL CONTAINER, AND GLASS TUBE FOR PHARMACEUTICAL CONTAINER**

(57)     A glass for a pharmaceutical container having excellent chemical durability, transparency, and devitrification resistance, and a glass tube for a pharmaceutical container obtained therefrom are provided. A glass for a pharmaceutical container contains, as a glass composition, in mass%, from 65% to 80% of $SiO_2$, from 1% to 10% of $Al_2O_3$, from 5% to 20% of $B_2O_3$, more than 0% to 0.1% of $MoO_3$, from 0% to 10% of $MgO+CaO+SrO+BaO$, and from 1% to 20% of $Li_2O+Na_2O+K_2O$.

EP 4 663 614 A1

**Description**

TECHNICAL FIELD

The present invention relates to a glass for a pharmaceutical container and a glass tube for a pharmaceutical container for use in a glass for a tube bottle, such as a vial or an ampoule, or a syringe for injection.

BACKGROUND ART

A glass for a pharmaceutical container such as a vial and an ampoule is required to have the following properties.

(a) Components in an aqueous-based medicament for filling and components in a glass do not react with each other,
(b) chemical durability is high so as not to contaminate the aqueous-based medicament for filling, and
(c) a working temperature is low such that processing into a vial, an ampoule, or the like can be performed at a low temperature.

For example, as described in Patent Literature 1, a standard glass for a pharmaceutical container that satisfies these required properties contains, as constituent components, $SiO_2$, $B_2O_3$, $Al_2O_3$, $Na_2O$, $K_2O$, CaO, BaO, and a small amount of fining agent. Note that, the working temperature refers to a temperature at which a viscosity of the glass is $10^{4.0}$ dPa·s.

CITATION LIST

PATENT LITERATURE

Patent Literature 1: JP2014-237562A
Patent Literature 2: WO2019/078188

SUMMARY OF INVENTION

TECHNICAL PROBLEM

In recent years, the aqueous-based medicament for filling has been developed, and an aqueous-based medicament having higher efficacy is being used. These aqueous-based medicaments contain macromolecules such as proteins having complex molecular structures or mRNA, and are expected to improve therapeutic effects.
However, the aqueous-based medicament described above has higher reactivity than a related-art aqueous-based medicament made of a low molecular weight compound. Therefore, when the glass container is eroded during storage and the glass component is eluted into the aqueous-based medicament, the glass component reacts with the aqueous-based medicament, and activity of the aqueous-based medicament may greatly decrease. Therefore, the glass container is required to have higher chemical durability than before.
In general, in order to improve the chemical durability in the glass composition as described in Patent Literature 1, a method of increasing a content of $SiO_2$ or $Al_2O_3$, which is a constituent component of a network structure of the glass, is conceivable. However, in this method, the working temperature of the glass is likely to be high. Therefore, for example, Patent Literature 2 describes a glass for a pharmaceutical container in which a total content and a ratio of CaO and BaO are regulated, and BaO is preferentially added over CaO, thereby achieving a low working temperature and improving chemical durability, particularly hydrolytic resistance. However, BaO is a component in which barium feldspar crystals are likely to be precipitated by a reaction with an alumina-based refractory during glass melting, and there is a problem that the devitrification resistance is likely to deteriorate and the productivity is likely to decrease.
In addition, as described above, when the glass container is eroded by a high molecular weight component having low stability in the aqueous-based medicament or when these components are aggregated by external stimuli such as heat, light, and vibration, insoluble foreign matters may be formed in the aqueous-based medicament. When such foreign matters are taken into the human body, a thrombus may be formed, and pain or stimulation may occur. Therefore, foreign matter inspection is performed by image or visual inspection before shipping the aqueous-based medicament. In the foreign matter inspection, it is important that the content in the container is likely to be visible, that is, the container is transparent. In the glass container, the transparency depends on the content of components such as iron and titanium contributing to coloring.

In view of the above circumstances, a technical object of the present invention is to provide a glass for a pharmaceutical container having excellent chemical durability, transparency, and devitrification resistance, and a glass tube for a pharmaceutical container obtained therefrom. Note that, in the present description, hydrolytic resistance and alkali resistance are collectively referred to as chemical durability.

SOLUTION TO PROBLEM

As a result of conducting intensive studies, the inventor of the present invention has found that the above problem can be solved by strictly regulating contents of glass components, and proposes the finding as the present invention. That is, a glass for a pharmaceutical container according to the present invention contains, as a glass composition, in mass%, from 65% to 80% of $SiO_2$, from 1% to 10% of $Al_2O_3$, from 5% to 20% of $B_2O_3$, more than 0% to 0.1% of $MoO_3$, from 0% to 10% of MgO+CaO+SrO+BaO, and from 1% to 20% of $Li_2O+Na_2O+K_2O$. Accordingly, it is possible to obtain a glass for a pharmaceutical container having excellent chemical durability, transparency, and devitrification resistance.

Here, "$Li_2O+Na_2O+K_2O$" is a total content of $Li_2O$, $Na_2O$, and $K_2O$. In addition, "MgO+CaO+SrO+BaO" refers to a total content of MgO, CaO, SrO, and BaO.

In the glass for a pharmaceutical container according to the present invention, it is preferable that a content of $Na_2O$ is from 5% to 9% and a content of $K_2O$ is from 0.1% to 3%. Accordingly, the chemical durability, particularly the hydrolytic resistance, can be improved, and a glass for a pharmaceutical container having low thermal expansion and a low working temperature can be likely to be obtained.

In the glass for a pharmaceutical container according to the present invention, it is preferable that a content of CaO is from 0.1% to 2% and a content of BaO is from 0.1% to less than 1.3%. Accordingly, it is likely to obtain a glass for a pharmaceutical container having a low working temperature.

In the glass for a pharmaceutical container according to the present invention, it is preferable that MgO+CaO+SrO+BaO is from 0.2% to 10%, and a content ratio $(Li_2O+Na_2O+K_2O)/(MgO+CaO+SrO+BaO)$ is from 3 to 10. Accordingly, the chemical durability, particularly the hydrolytic resistance, of the glass can be improved, and a low working temperature can be easily obtained. Here, "$(Li_2O+Na_2O+K_2O)/(MgO+CaO+SrO+BaO)$" is a value obtained by dividing the total content of $Li_2O$, $Na_2O$, and $K_2O$ by the total content of MgO, CaO, SrO, and BaO.

In the glass for a pharmaceutical container according to the present invention, it is preferable that a content of $Fe_2O_3$ is from 0.001% to 0.05%, a content of $TiO_2$ is from 0.001% to 0.05%, a content ratio $MoO_3/(Fe_2O_3+TiO_2)$ is from 0.0001 to 0.1, and a visible light transmittance at a thickness of 1 mm is 80% or more. Accordingly, it is likely to obtain a glass for a pharmaceutical container having excellent devitrification resistance while maintaining high transparency. Here, "$MoO_3/(Fe_2O_3+TiO_2)$" is a value obtained by dividing the content of $MoO_3$ by a total content of $Fe_2O_3$ and $TiO_2$.

In the glass for a pharmaceutical container according to the present invention, $F+Cl+Sb_2O_3+As_2O_3+SnO_2+CeO_2$ is preferably from 0.01% to 0.5%. Accordingly, it is possible to improve the transparency and a bubble removing property of the glass. Here, "$F+Cl+Sb_2O_3+As_2O_3+SnO_2+CeO_2$" is a total content of F, Cl, $Sb_2O_3$, $As_2O_3$, $SnO_2$, and $CeO_2$.

In the glass for a pharmaceutical container according to the present invention, it is preferable that $Fe_2O_3+TiO_2+MoO_3+SnO_2+CeO_2$ is 0.5% or less, and a visible light transmittance at a thickness of 1 mm is 85% or more. Accordingly, it is likely to improve the transparency of the glass. Here, "$Fe_2O_3+TiO_2+MoO_3+SnO_2+CeO_2$" is a total content of $Fe_2O_3$, $TiO_2$, $MoO_3$, $SnO_2$ and $CeO_2$.

In the glass for a pharmaceutical container according to the present invention, it is preferable that a content of $Li_2O$ is from 0% to 0.1%, a content of MgO is from 0% to 0.1%, a content of SrO is from 0% to 0.1%, $Li_2O+Na_2O+K_2O$ is from 5.1% to 12.1%, and MgO+CaO+SrO+BaO is from 0.2% to less than 2.5%. Accordingly, it is possible to improve the meltability, the formability, and the chemical durability of the glass.

The glass for a pharmaceutical container according to the present invention preferably has a thermal expansion coefficient at 30°C to 380°C of $40 \times 10^{-7}/°C$ to $60 \times 10^{-7}/°C$. Accordingly, breakage due to thermal shock is less likely to occur in a glass manufacturing step, a processing step, a sterilization step, or the like.

A glass for a pharmaceutical container and a glass tube for a pharmaceutical container according to the present invention contain, as a glass composition, in mass%, from 68% to 77% of $SiO_2$, from 6.5% to 8% of $Al_2O_3$, from 9% to 12% of $B_2O_3$, more than 0% to 0.1% of $MoO_3$, from 0.1% to 2% of CaO, from 0.1% to less than 1.3% of BaO, from 0.2% to less than 2.5% of MgO+CaO+SrO+BaO, from 5% to 9% of $Na_2O$, from 0.1% to 3% of $K_2O$, from 5.1% to 12.1% of $Li_2O+Na_2O+K_2O$, from 0.001% to 0.05% of $Fe_2O_3$, from 0.001% to 0.05% of $TiO_2$, and from 0.01% to 0.5% of $F+Cl+Sb_2O_3+As_2O_3+SnO_2+CeO_2$, in which a content ratio $MoO_3/(Fe_2O_3+TiO_2)$ is from 0.0001 to 0.1. Accordingly, it is easy to obtain a glass for a pharmaceutical container and a glass tube for a pharmaceutical container, which have excellent chemical durability, devitrification resistance, and bubble removing property while maintaining high transparency.

In the glass for a pharmaceutical container and the glass tube for a pharmaceutical container according to the present invention, a content of Cl is from 0.001% to 0.1% and a content of $Sb_2O_3$ is from 0.001% to 0.05%. Accordingly, it is easy to obtain a glass for a pharmaceutical container and a glass tube for a pharmaceutical container that are less likely to cause defects when processed into a pharmaceutical container such as a vial or an ampoule.

ADVANTAGEOUS EFFECTS OF INVENTION

According to the present invention, it is possible to provide a glass for a pharmaceutical container having excellent chemical durability, transparency, and devitrification resistance, and a glass tube for a pharmaceutical container obtained therefrom.

DESCRIPTION OF EMBODIMENTS

First, reasons why a content range of each component of a glass for a pharmaceutical container and a glass tube for a pharmaceutical container according to the present invention is limited will be described. Note that, in the following description, "%" means "mass%" unless otherwise specified.

$SiO_2$ is one of components that constitute a network structure of the glass. As a content of $SiO_2$ is smaller, formability is improved, but when the content is too small, chemical durability is likely to deteriorate and vitrification is less likely to proceed. In addition, a thermal expansion coefficient is likely to increase, and thermal shock resistance is likely to decrease. Therefore, the content of $SiO_2$ is 65% or more, preferably 65.5% or more, 66% or more, 66.5% or more, 67% or more, 67.5% or more, and particularly preferably 68% or more. On the other hand, as the content of $SiO_2$ is larger, the chemical durability is improved, but when the content is too large, a viscosity of the glass increases, the working temperature is likely to increases, a liquidus temperature increases, and the glass is likely to devitrify. Therefore, the content of $SiO_2$ is 80% or less, preferably 79.5% or less, 79% or less, 78.5% or less, 78% or less, 77.5% or less, and particularly preferably 77% or less.

$Al_2O_3$ is one of the components that constitute the network structure of the glass. It has an effect of improving the chemical durability, and has a high effect of improving hydrolytic resistance particularly. When a content of $Al_2O_3$ is too small, the hydrolytic resistance is likely to deteriorate. Therefore, the content of $Al_2O_3$ is 1% or more, preferably 2% or more, 3% or more, 4% or more, 4.5% or more, 5% or more, 5.5% or more, 6% or more, 6.1% or more, 6.2% or more, 6.3% or more, 6.4% or more, and particularly preferably 6.5% or more. On the other hand, when the content of $Al_2O_3$ is too large, the viscosity of the glass is likely to increase, and the glass is likely to devitrify and difficult to form. Therefore, the content of $Al_2O_3$ is 10% or less, preferably 9.5% or less, 9% or less, 8.9% or less, 8.8% or less, 8.7% or less, 8.6% or less, 8.5% or less, 8.4% or less, 8.3% or less, 8.2% or less, 8.1% or less, and particularly preferably 8% or less.

$B_2O_3$ has an effect of decreasing the viscosity of the glass, improving the meltability and the formability of the glass, and decreasing a density and a Young's modulus of the glass. Therefore, a content of $B_2O_3$ is 5% or more, preferably 5.5% or more, 6% or more, 6.5% or more, 7% or more, 7.5% or more, 8% or more, 8.3% or more, 8.5% or more, 8.8% or more, and particularly preferably 9% or more. However, when the content of $B_2O_3$ is too large, the chemical durability, particularly alkali resistance, is likely to deteriorate. Therefore, the content of $B_2O_3$ is 20% or less, preferably 19% or less, 18% or less, 17% or less, 16% or less, 15% or less, 14% or less, 13.5% or less, 13% or less, 12.5% or less, and preferably particularly 12% or less.

$MoO_3$ is a component that reduces an amount of water in the glass. When the amount of water in the glass is reduced, a liquidus viscosity increases, and devitrification resistance of the glass can be improved. In the case of melting the glass by electric melting, Mo may be used as a constituent component of an electrode, and may be mixed into the glass in the melting step. Therefore, by adding $MoO_3$ to a glass raw material and melting the glass by electric melting, the devitrification resistance of the glass can be further improved. Note that, the electric melting is a melting method having higher energy efficiency than a melting method using a burner flame in the related art, and melting the glass by the electric melting can also contribute to prevention of a $CO_2$ emission amount in the glass manufacturing. From the above, a content of $MoO_3$ is more than 0%, preferably 0.00001% or more, 0.00002% or more, 0.00003% or more, 0.00004% or more, 0.00005% or more, 0.00006% or more, 0.00007% or more, 0.00008% or more, 0.00009% or more, 0.0001% or more, 0.00015% or more, 0.0002% or more, 0.00025% or more, and particularly preferably 0.0003% or more. On the other hand, when the content of $MoO_3$ is too large, the glass is black colored and a visible light transmittance decreases. Therefore, the content of $MoO_3$ is 0.1% or less, preferably 0.05% or less, 0.04% or less, 0.03% or less, 0.02% or less, 0.01% or less, 0.009% or less, 0.008% or less, 0.007% or less, 0.006% or less, 0.005% or less, 0.004% or less, 0.003% or less, and particularly preferably less than 0.003%.

$Li_2O$ has the effect of decreasing the viscosity of the glass and improving the meltability and the formability of the glass. Among alkali metal oxides, $Li_2O$ has the greatest effect of decreasing the viscosity of the glass, followed in order by $Na_2O$ and $K_2O$. However, when a content of $Li_2O$ is too large, the chemical durability is likely to deteriorate, and devitrification is likely to occur. Therefore, the content of $Li_2O$ is preferably 5% or less, 4% or less, 3% or less, 2% or less, 1% or less, 0.9% or less, 0.8% or less, 0.7% or less, 0.6% or less, 0.5% or less, 0.4% or less, 0.3% or less, 0.2% or less, and particularly preferably 0.1% or less.

$Na_2O$ has the effect of decreasing the viscosity of the glass and improving the meltability and the formability of the

glass, similar to $Li_2O$. It is also a component that improves the devitrification resistance and a devitrification property due to a reaction with a refractory formed body, particularly an alumina refractory. When a content of $Na_2O$ is too small, the devitrification resistance is likely to decrease. Therefore, the content of $Na_2O$ is preferably 0.1% or more, 0.5% or more, 1% or more, 1.5% or more, 2% or more, 2.5% or more, 3% or more, 3.5% or more, 4% or more, 4.5% or more, and particularly preferably 5% or more. On the other hand, when the content of $Na_2O$ is too large, the chemical durability, particularly the hydrolytic resistance, is likely to deteriorate. Therefore, the content of $Na_2O$ is preferably 15% or less, 14% or less, 13% or less, 12% or less, 11% or less, 10% or less, 9.8% or less, 9.5% or less, 9.3% or less, 9.1% or less, and particularly preferably 9% or less.

$K_2O$ has the effect of decreasing the viscosity of the glass and improving the meltability and the formability of the glass, although not as effective as $Li_2O$ and $Na_2O$. When a content of $K_2O$ is too small, the devitrification resistance may decrease. Therefore, the content of $K_2O$ is preferably more than 0%, 0.01% or more, 0.03% or more, 0.05% or more, 0.08% or more, and particularly preferably 0.1% or more. On the other hand, when the content of $K_2O$ is too large, the chemical durability, particularly the hydrolytic resistance, is likely to deteriorate. Therefore, the content of $K_2O$ is preferably 5% or less, 4.5% or less, 4% or less, 3.9% or less, 3.8% or less, 3.7% or less, 3.6% or less, 3.5% or less, 3.4% or less, 3.3% or less, 3.2% or less, 3.1% or less, and particularly preferably 3% or less.

$Li_2O$, $Na_2O$, and $K_2O$, which are alkali metal oxides ($R_2O$), are one of the components that cut the network structure of the glass, and have the effect of decreasing the viscosity of the glass and improving the meltability and the formability of the glass. The content of $Li_2O+Na_2O+K_2O$ is 1% or more, preferably 1.5% or more, 2% or more, 2.5% or more, 3% or more, 3.5% or more, 4% or more, 4.5% or more, 5% or more, 5.1% or more, 6 or more, 7 or more, and particularly preferably 7.5% or more. On the other hand, when the content of $Li_2O+Na_2O+K_2O$ is too large, the chemical durability, particularly the hydrolytic resistance, deteriorates, or the thermal expansion coefficient increases, decreasing the thermal shock resistance. Therefore, the content of $Li_2O+Na_2O+K_2O$ is 20% or less, preferably 19% or less, 18% or less, 17% or less, 16% or less, 15% or less, 14.5% or less, 14% or less, 13.5% or less, 13% or less, 12.5% or less, 12.1% or less, 11% or less, 10% or less, and particularly 9.5% or less.

Among the alkali metal oxides ($R_2O$), $Li_2O$ has the greatest effect of decreasing the viscosity of the glass, followed in order by $Na_2O$ and $K_2O$. However, since $Li_2O$ is a component that deteriorates the devitrification resistance of the glass, a relationship of the contents of the alkali metal oxides is preferably $Na_2O \geq K_2O \geq Li_2O$, $Na_2O > K_2O \geq Li_2O$ or $Na_2O \geq K_2O > Li_2O$, and particularly $Na_2O > K_2O > Li_2O$. In addition, when a ratio of $K_2O$ among the alkali metal oxides is too large, it is difficult to achieve both the chemical durability and a low working temperature. Therefore, it is particularly preferable that $Na_2O > K_2O$.

A reduction in the amount of water in the glass influences the chemical durability, particularly the hydrolytic resistance of the glass. As the amount of water in the glass decreases, the hydrolytic resistance is improved. $MoO_3$ reduces the amount of water in the glass, and therefore the incorporation of $MoO_3$ contributes to improving the hydrolytic resistance. Among the components contained in the glass composition of the present invention, examples of a component that greatly influences the decrease of the hydrolytic resistance include $Li_2O$, $Na_2O$, and $K_2O$. The magnitude of the influence on the decrease of the hydrolytic resistance is $K_2O > Na_2O > Li_2O > MoO_3$. Contrary to $MoO_3$, the hydrolytic resistance deteriorates as the contents of $Li_2O$, $Na_2O$, and $K_2O$ increase. Therefore, in order to improve the hydrolytic resistance, a lower limit of a content ratio $100 \times MoO_3/(Li_2O+Na_2O+K_2O)$ is preferably 0.00001 or more, 0.0001 or more, 0.0003 or more, 0.0005 or more, 0.001 or more, and particularly preferably 0.003 or more. On the other hand, as described above, $MoO_3$ is also a component that influences the transmittance of the glass. When the content of $MoO_3$ is too large, the glass may be colored and the transmittance may decrease. Therefore, an upper limit of the content ratio $100 \times MoO_3/(Li_2O+Na_2O+K_2O)$ is preferably 10 or less, 5 or less, 4 or less, 3 or less, 2 or less, 1.5 or less, 1.4 or less, 1.3 or less, 1.2 or less, 1.1 or less, and particularly preferably 1 or less.

MgO, like the alkali metal oxides, is one of the components that cut the network structure of the glass, that decreases a viscosity in high temperature of the glass, and that improves the meltability and the formability of the glass. In addition, it is a component that also influences the chemical durability, and when a content of MgO is too large, the chemical durability, particularly the hydrolytic resistance, is likely to deteriorate, and the glass is likely to devitrify. Therefore, the content of MgO is preferably 5% or less, 4% or less, 3% or less, 2% or less, 1% or less, 0.9% or less, 0.8% or less, 0.7% or less, 0.6% or less, 0.5% or less, 0.4% or less, 0.3% or less, 0.2% or less, 0.1% or less, 0.05% or less, 0.03% or less, less than 0.03%, 0.01% or less, less than 0.01%, and particularly preferably less than 0.001%.

CaO, like the alkali metal oxides, is one of the components that cut the network structure of the glass, that decreases the viscosity in high temperature of the glass, and that improves the meltability and the formability of the glass. In addition, since CaO is available as a raw material at a lower cost than other alkaline earth metal oxides, it is possible to improve the meltability and the formability while reducing a manufacturing cost. Therefore, a content of CaO is preferably more than 0%, 0.05% or more, 0.1% or more, and particularly preferably 0.3% or more. In addition, it is a component that also influences the chemical durability, and when the content of CaO is too large, the chemical durability, particularly the hydrolytic resistance, may decrease. Therefore, the content of CaO is preferably 5% or less, 4% or less, 3% or less, 2% or less, 1% or less, 0.9% or less, and particularly preferably 0.8% or less.

BaO, like the alkali metal oxides, is one of the components that cut the network structure of the glass, that decreases the viscosity in high temperature of the glass, and that improves the meltability and the formability of the glass. Therefore, a content of BaO is preferably more than 0%, 0.1% or more, 0.3% or more, 0.5% or more, 0.7% or more, and particularly preferably 1% or more. In addition, it is a component that also influences the chemical durability, and when the content of BaO is too large, the chemical durability, particularly the hydrolytic resistance, may decrease, and barium feldspar crystals are likely to be precipitated by a reaction between the BaO component and an alumina-based refractory during glass melting or during formation of a tube. The content of BaO is preferably 5% or less, 4% or less, 3.5% or less, 3% or less, 2.5% or less, 2% or less, 1.9% or less, 1.8% or less, 1.7% or less, 1.6% or less, 1.5% or less, 1.4% or less, 1.3% or less, less than 1.3%, and particularly preferably 1.25% or less.

SrO, like the alkali metal oxides, is one of the components that cut the network structure of the glass, that decreases the viscosity in high temperature of the glass, and that improves the meltability and the formability of the glass. In addition, it is a component that also influences the chemical durability, and when a content of SrO is too large, the chemical durability, particularly the hydrolytic resistance, may decrease. The content of SrO is preferably 1% or less, 0.9% or less, 0.8% or less, 0.7% or less, 0.6% or less, 0.5% or less, 0.4% or less, 0.3% or less, 0.2% or less, 0.1% or less, 0.05% or less, 0.03% or less, less than 0.03%, 0.01% or less, less than 0.01%, and particularly preferably less than 0.001%.

MgO, CaO, SrO and BaO, which are alkaline earth metal oxides (R'O), are one of the components that cut the network structure of the glass like the alkali metal oxides, and also have the effect of decreasing the viscosity of the glass. When the content of MgO+CaO+SrO+BaO is too large, the chemical durability, particularly the hydrolytic resistance, is likely to deteriorate, and the devitrification resistance is also likely to decrease. Therefore, the content of MgO+CaO+SrO+BaO is 10% or less, preferably 5% or less, 4.5% or less, 4% or less, 3.5% or less, 3.4% or less, 3.3% or less, 3.2% or less, 3.1% or less, 3% or less, 2.9% or less, 2.8% or less, 2.7% or less, 2.6% or less, 2.5% or less, less than 2.5%, and particularly preferably 2.2% or less. The content of MgO+CaO+SrO+BaO is 0% or more, and is preferably more than 0%, 0.1% or more, 0.2% or more, 0.3% or more, 0.4% or more, 0.5% or more, 0.7% or more, 1% or more, 1.5% or more, and particularly preferably 1.7% or more in the case of improving the meltability and processability of the glass.

As a result of examination from two viewpoints of glass properties and manufacturing cost, CaO and BaO are components preferred as the alkaline earth metal oxide contained in the glass. However, when the content of CaO and BaO is too large, the amount of alkali eluted from the glass increases, the thermal expansion coefficient further increases, and the thermal shock resistance decreases. The content of CaO+BaO is preferably 5% or less, 4.5% or less, 4% or less, 3.5% or less, 3.3% or less, 3% or less, 2.8% or less, 2.5%, 2.2% or less, and particularly preferably 2% or less. Here, "CaO+BaO" refers to the total content of CaO and BaO. On the other hand, when the content of CaO and BaO is too small, it is difficult to obtain a low working temperature. Therefore, the content of CaO+BaO is preferably more than 0%, 0.2% or more, 0.5% or more, 1% or more, 1.3% or more, and particularly preferably 1.5% or more.

The contents of CaO and BaO contained in the present invention are preferably CaO $\leq$ BaO. More preferably, CaO < BaO. When CaO/BaO is too large, the hydrolytic resistance is likely to deteriorate. On the other hand, as CaO/BaO is smaller, a glass having more excellent hydrolytic resistance is obtained. As a particularly preferred relationship between contents of CaO and BaO, CaO/BaO, that is, a value obtained by dividing the content of CaO by the content of BaO, is preferably less than 1, 0.9 or less, 0.8 or less, 0.7 or less, and particularly preferably 0.65 or less, and is preferably 0.1 or more, 0.2 or more, and particularly preferably 0.3 or more.

Both the alkali metal oxide ($R_2O$) and the alkaline earth metal oxide (R'O) are components that cut the network structure of the glass, and have an effect of decreasing the viscosity of the glass. They are also components that influence the chemical durability. However, when the content of any one of the alkali metal oxide ($R_2O$) and the alkaline earth metal oxide (R'O) is too large or too small, it is difficult to achieve excellent chemical durability, particularly hydrolytic resistance, low thermal expansion, and a low working temperature. Therefore, in the present invention, for a content ratio ($Li_2O$+$Na_2O$+$K_2O$)/(MgO+CaO+SrO+BaO), an upper limit is preferably 100 or less, 50 or less, 45 or less, 40 or less, 35 or less, 30 or less, 25 or less, 20 or less, 15 or less, 12 or less, and particularly preferably 10 or less, and a lower limit is preferably 0.1 or more, 0.5 or more, 1 or more, 1.5 or more, 2 or more, 2.5 or more, 2.6 or more, 2.7 or more, 2.8 or more, 2.9 or more, and particularly preferably 3 or more.

$SiO_2$, $Al_2O_3$, and $B_2O_3$ are components that form the network structure of the glass, and the alkali metal oxide ($R_2O$) and the alkaline earth metal oxide (R'O) are components that cut the network structure of the glass. A content ratio ($R_2O$+R'O-$Al_2O_3$)/($SiO_2$+$Al_2O_3$+$B_2O_3$) is a ratio of an amount of the components that cut the network structure of the glass to an amount of the components that form the network structure of the glass, and by suitably controlling the content ratio, it is possible to obtain a glass having excellent chemical durability, particularly excellent hydrolytic resistance, while realizing high processability without excessively increasing the viscosity of the glass. That is, a lower limit of the content ratio ($R_2O$+R'O-$Al_2O_3$)/($SiO_2$+$Al_2O_3$+$B_2O_3$) is preferably 0 or more, 0.001 or more, 0.003 or more, 0.005 or more, 0.007 or more, 0.009 or more, and particularly preferably 0.01 or more, and an upper limit thereof is preferably 0.1 or less, 0.09 or less, 0.07 or less, 0.055 or less, 0.05 or less, and particularly preferably 0.045 or less. When the content ratio is too small, the viscosity of the glass is too high, and the processability is likely to decrease. On the other hand, when the content ratio is too large, the chemical durability, particularly the hydrolytic resistance, is likely to deteriorate.

The glass for a pharmaceutical container and the glass tube for a pharmaceutical container according to the present invention may contain other components in addition to the above components.

$Fe_2O_3$ is a component that is often mixed in as an impurity from a raw material or manufacturing equipment. When a content of $Fe_2O_3$ is too large, the glass is colored and the visible light transmittance decreases. Therefore, an upper limit of the content of $Fe_2O_3$ is preferably 0.5% or less, 0.3% or less, 0.1% or less, 0.05% or less, 0.04% or less, 0.03% or less, 0.02% or less, and particularly preferably 0.01% or less. On the other hand, since $Fe_2O_3$ is easily mixed as an impurity, the cost of the glass raw material is likely to increase when $Fe_2O_3$ is to be completely removed. Therefore, in order to reduce the manufacturing cost, a lower limit of the content of $Fe_2O_3$ is preferably 0.00001 or more, 0.0001% or more, 0.001% or more, and particularly preferably 0.01% or more.

Similar to $Fe_2O_3$, $TiO_2$ is a component that is often mixed in as an impurity from the raw material or the manufacturing equipment. When a content of $TiO_2$ is too large, the glass is black colored and the visible light transmittance decreases. Therefore, an upper limit of the content of $TiO_2$ is preferably 0.5% or less, 0.3% or less, 0.1% or less, 0.05% or less, 0.04% or less, and particularly preferably 0.03% or less. On the other hand, when $TiO_2$ is to be completely removed, the cost of the glass raw material is likely to increase. Therefore, in order to reduce the manufacturing cost, a lower limit of the content of $TiO_2$ is preferably 0.00001 or more, 0.0001 % or more, 0.001% or more, and particularly preferably 0.01% or more.

$MoO_3$ is a component that reduces the amount of water in the glass and that contributes to the devitrification resistance of the glass, and is also a component that influences the coloration of the glass. As compared with $TiO_2$ and $Fe_2O_3$ that influence the coloration of the glass similar to $MoO_3$, the magnitude of the influence is $MoO_3 > Fe_2O_3 > TiO_2$. Therefore, the content of $MoO_3$ is preferably smaller than the contents of $Fe_2O_3$ and $TiO_2$. In order to improve the devitrification resistance while maintaining a high transmittance, an upper limit of a content ratio $MoO_3/(Fe_2O_3+TiO_2)$ is preferably 1 or less, 0.9 or less, 0.8 or less, 0.7 or less, 0.6 or less, 0.5 or less, 0.4 or less, 0.3 or less, 0.2 or less, 0.1 or less, and particularly preferably 0.05 or less. A lower limit of the content ratio $MoO_3/(Fe_2O_3+TiO_2)$ is preferably 0.00001 or more, 0.00002 or more, 0.00003 or more, 0.00004 or more, 0.00005 or more, 0.00006 or more, 0.00007 or more, 0.00008 or more, 0.00009 or more, 0.0001 or more, 0.0005 or more, 0.001 or more, 0.002 or more, 0.003 or more, 0.004 or more, and particularly preferably 0.005 or more.

$SnO_2$ is a component that acts as a fining agent for a glass melt. When $SnO_2$ is contained, bubble removing of the glass is improved, and a glass having few defects is easily obtained. On the other hand, when a content of $SnO_2$ is too large, the glass is brown colored and the visible light transmittance decreases. Therefore, the content of $SnO_2$ is preferably 3% or less, 1% or less, 0.8% or less, 0.7% or less, 0.6% or less, 0.5% or less, 0.45% or less, 0.4% or less, 0.3% or less, and particularly preferably 2.5% or less. When the content of $SnO_2$ is too small, the time required for bubble removing is likely to increase, and the amount of glass containing bubble defects may increase, so that the content of $SnO_2$ is preferably more than 0%, 0.0001% or more, or 0.005% or more from the viewpoint of obtaining a glass having a good bubble removing property.

$ZrO_2$ is a component that improves the chemical durability, and is particularly a component having an excellent effect of improving the hydrolytic resistance and the alkali resistance. However, when a content of $ZrO_2$ is too large, the viscosity of the glass increases and the devitrification resistance is likely to decrease. Therefore, the content of $ZrO_2$ is preferably from 0% to 3%, from 0% to 2.5%, from 0% to 2%, from 0% to 1.5%, from 0.1% to 0.8%, and particularly preferably from 0.2% to 0.6%.

ZnO is a component that decreases the viscosity in high temperature without decreasing a viscosity in low temperature. However, when a content of ZnO is too large, there is a tendency that the chemical durability, particularly the hydrolytic resistance deteriorates, the glass is likely to be phase-separated, the devitrification resistance is likely to decrease, and the density is increased. Therefore, the content of ZnO is preferably from 0% to 4%, from 0% to 1%, and particularly preferably from 0% to 0.01%.

$P_2O_5$ is a component that decreases the viscosity in high temperature and improves the meltability and the formability. It is also a component that reduces the Young's modulus. However, when a content of $P_2O_5$ is too large, the glass is likely to be clouded due to phase separation and to have a decrease in acid resistance. Therefore, the content of $P_2O_5$ is preferably from 0% to 5%, from 0% to 4%, from 0% to 3.5%, and particularly preferably from 0% to 3%.

In addition to $SnO_2$, one or more of F, Cl, $Sb_2O_3$, $As_2O_3$, $CeO_2$, $SO_3$, etc. may be introduced as a fining agent. From the viewpoint of obtaining a glass having a better bubble removing property, a content of each of these fining agents is preferably more than 0%, 0.00001% or more, 0.0001% or more, and particularly preferably 0.001% or more. On the other hand, when the content is too large, the glass may be colored due to a fining agent component, or the glass may be cloudy or blackened when processed into a container such as a vial or an ampoule to decrease the transmittance. Therefore, from the viewpoint of obtaining a glass having a higher transmittance, the content is preferably 5% or less, 1% or less, 0.5% or less, 0.1% or less, and particularly preferably 0.05% or less.

$Fe_2O_3$, $TiO_2$, $MoO_3$, $SnO_2$, and $CeO_2$ are components that can color the glass when the content is too large. Therefore, in the glass for a pharmaceutical container and the glass tube for a pharmaceutical container according to the present invention, $Fe_2O_3+TiO_2+MoO_3+SnO_2+CeO_2$ is preferably 1% or less, 0.9% or less, 0.8% or less, 0.7% or less, 0.6% or less, 0.5% or less, 0.4% or less, 0.3% or less, and particularly preferably less than 0.3%.

As more fining agent component is contained, the bubble removing property is improved. However, when the content of the fining agent component is too large, the glass may be colored due to the fining agent component, or the glass may be cloudy or blackened when processed into a container such as a vial or an ampoule to decrease the transmittance. Therefore, in the glass for a pharmaceutical container and the glass tube for a pharmaceutical container according to the present invention, for $F+Cl+Sb_2O_3+As_2O_3+SnO_2+CeO_2$, an upper limit is preferably 1% or less, 0.9% or less, 0.8% or less, 0.7% or less, 0.6% or less, 0.5% or less, 0.4% or less, 0.35% or less, 0.3% or less, 0.2% or less, and particularly preferably 0.1% or less, and a lower limit is preferably 0.0001% or more, 0.001% or more, 0.005% or more, 0.01 or more, and particularly preferably 0.05% or more. Accordingly, it becomes less likely to cause defects due to the fining agent, and it is possible to obtain a good bubble removing property.

In order to improve the chemical durability and decrease the viscosity in high temperature, $Cr_2O_3$, $PbO$, $La_2O_3$, $WO_3$, $Nb_2O_5$, $Y_2O_3$, or the like may each be contained in an amount of 3% or less, 2% or less, 1% or less, less than 1%, or 0.5% or less.

Components such as $H_2$, $CO_2$, $CO$, $H_2O$, $He$, $Ne$, $Ar$, and $N_2$ may be contained as impurities up to 0.1% each. In addition, an impurity of a noble metal element such as Pt, Rh, or Au may be contained in a range of 500 ppm or less, or 300 ppm or less.

The glass for a pharmaceutical container and the glass tube for a pharmaceutical container according to the present invention preferably have the following properties.

The glass for a pharmaceutical container and the glass tube for a pharmaceutical container according to the present invention preferably have a transmittance of at least 50% or more at a wavelength of 380 nm to 760 nm as visible light when the thickness is 1 mm. The transmittance is more preferably 60% or more, 70% or more, 80% or more, 85% or more, 86% or more, 87% or more, 88% or more, 89% or more, and particularly preferably 90% or more. When the transmittance is increased, visibility of the inside of the glass container is improved, and foreign matters generated after filling with a pharmaceutical is likely to be found by foreign matter inspection.

In the glass for a pharmaceutical container and the glass tube for a pharmaceutical container according to the present invention, the working temperature is preferably 1350°C or lower, 1300°C or lower, 1260°C or lower, and particularly preferably 1250°C or lower. When the working temperature is too high, a forming temperature of the glass melt is high, so that the lifetime of forming equipment is likely to be shortened.

In the glass for a pharmaceutical container and the glass tube for a pharmaceutical container according to the present invention, a temperature at which the viscosity of the glass melt is $10^{2.5}$ dPa·s is preferably 1700°C or lower, 1650°C or lower, 1640°C or lower, 1630°C or lower, 1620°C or lower, 1610°C or lower, and particularly preferably 1600°C or lower. The lower the temperature of the glass melt at a viscosity of $10^{2.5}$ dPa·s, the more likely the glass is to be melted at a low temperature, which reduces the burden on glass manufacturing equipment such as a melting kiln and also makes it more likely to reduce a bubble count. Therefore, the lower the temperature at the viscosity in high temperature of $10^{2.5}$ dPa·s, the more likely it is to reduce the manufacturing cost of the glass tube. On the other hand, when the temperature at which the viscosity of the glass melt is $10^{2.5}$ dPa·s is high, a refractory in the melting kiln and an electrode used for electric melting are likely to be eroded by the glass, and the lifetime of the forming equipment is likely to be shortened.

In the glass for a pharmaceutical container and the glass tube for a pharmaceutical container according to the present invention, a class in a hydrolytic resistance test (washing with acetone) according to ISO 720 is preferably at least HGA2, and particularly preferably HGA1.

In addition, an alkali elution amount in terms of $Na_2O$ in the hydrolytic resistance test (washing with acetone) according to ISO720 is preferably less than 527 μg/g, 200 μg/g or less, 100 μg/g or less, 90 μg/g or less, 80 μg/g or less, 70 μg/g or less, less than 62 μg/g, 60 μg/g or less, 57 μg/g or less, 55 μg/g or less, 53 μg/g or less, and particularly 50 μg/g or less. When the alkali elution amount is too high, an alkali component is eluted from the glass, causing minute defects on the surface, making the glass more susceptible to cracking when hit by an object.

Here, the "hydrolytic resistance test (washing with acetone) according to ISO 720" refers to the following test.

(1) A glass sample is ground in an alumina mortar and classified into particles having a particle diameter of 300 μm to 425 μm using a sieve.

(2) The obtained powder sample is washed with acetone and dried in an oven at 140°C.

(3) The dried powder sample (10 g) is put into a quartz flask, 50 mL of purified water is added thereto, the flask is closed, and a treatment is performed in an autoclave. The treatment is performed under the following treatment conditions: the temperature is increased from 100°C to 121°C at 1°C/min, then held at 121°C for 30 minutes, and then lowered to 100°C at 0.5°C/min.

(4) After the treatment in an autoclave, the solution in the quartz flask is poured into another beaker, the inside of the quartz flask is washed three times with 15 mL of purified water, and the washing solutions are also added to the beaker.

(5) A methyl red indicator is added to the beaker and titrated with a 0.02 mol/L hydrochloric acid aqueous solution.

(6) Assuming that 1 mL of the 0.02 mol/L hydrochloric acid aqueous solution corresponds to 620 μg of $Na_2O$, an alkali

elution amount per 1 g of the glass is calculated in terms of $Na_2O$.

Note that, "the class in the hydrolytic resistance test (washing with acetone) according to ISO 720 is at least HGA2" means that the alkali elution amount per 1 g of the glass calculated in terms of $Na_2O$, as determined by the above test, is 527 $\mu$g/g or less.

In addition, the alkali resistance in a test according to ISO 695 is preferably at least class 2. Here, the "alkali resistance test according to ISO 695" refers to the following test.

(1) A sample having a surface area of A $cm^2$ (where A is 10 $cm^2$ to 15 $cm^2$) is prepared, the entire surface of which is mirror-finished. First, as a pretreatment, a solution is prepared by mixing hydrofluoric acid (40 mass%) and hydrochloric acid (2 mol/L) in a volume ratio of 1:9. The sample is immersed in this solution and stirred with a magnetic stirrer for 10 minutes. The sample is taken out and subjected to ultrasonic washing with purified water for 2 minutes three times, and ultrasonic washing with ethanol for 1 minute twice.

(2) Thereafter, the sample is dried in an oven at 110°C for 1 hour and allowed to cool in a desiccator for 30 minutes.

(3) A mass m1 of the sample is measured and recorded with an accuracy of ±0.1 mg.

(4) An 800 mL solution is prepared by mixing a sodium hydroxide aqueous solution (1 mol/L) and a sodium carbonate aqueous solution (0.5 mol/L) in a volume ratio of 1:1. This solution is put into a stainless steel container and boiled using a mantle heater. Next, a sample suspended from a platinum wire is put into the solution and held for 3 hours, and then the sample is taken out and subjected to ultrasonic washing with purified water for 2 minutes three times and ultrasonic washing with ethanol for 1 minute twice. Thereafter, the sample is dried in an oven at 110°C for 1 hour and allowed to cool in a desiccator for 30 minutes.

(5) A mass m2 of the sample is measured and recorded with an accuracy of ±0.1 mg.

(6) Based on the masses m1 and m2 (mg) before and after charging into the boiling alkaline solution and the surface area A ($cm^2$) of the sample, a mass reduction amount per unit area is calculated using the following equation, and this is used as the measured value in the alkali resistance test.

$$\text{(Mass reduction amount per unit area)} = 100 \times (m1\text{-}m2)/A$$

Note that, "the alkali resistance in the test according to ISO 695 is class 2" means that the mass reduction amount per unit area determined as above is 175 $mg/dm^2$ or less. Note that, when the mass reduction amount per unit area determined as above is 75 $mg/dm^2$ or less, "the alkali resistance in the test according to ISO 695 is class 1". The glass for a pharmaceutical container and the glass tube for a pharmaceutical container according to the present invention have a mass reduction amount per unit area of preferably 130 $mg/dm^2$ or less, and particularly 75 $mg/dm^2$ or less. When the mass reduction amount is large, the alkali component is eluted from the glass, causing minute defects on the surface, making the glass more susceptible to cracking when hit by an object.

A $\beta$-OH value is an index indicating the amount of water in the glass. When the $\beta$-OH value is decreased, a strain point Ps, an annealing point Ta, and a softening point Ts can be increased. Therefore, even when the glass composition is the same, a glass having a low $\beta$-OH value is less likely to soften and flow at the same temperature, and desired devitrification resistance is likely to be realized. In addition, when the glass is processed into a container shape, excessive softening and deformation of the glass can be prevented, and the glass is likely to be processed into a desired shape. On the other hand, when the $\beta$-OH value is too low, an amount of absorption of infrared rays is likely to be small in the case of processing the glass into a container shape, so that heat of a burner is less likely to be conducted, and a large amount of energy is required for the processing. Therefore, the $\beta$-OH value of the glass for a pharmaceutical container and the glass tube for a pharmaceutical container according to the present invention is preferably 0.85/mm or less, 0.80/mm or less, 0.75/mm or less, particularly 0.70/mm, and is preferably 0.3/mm or more, 0.35/mm or more, 0.4/mm or more, particularly 0.45/mm or more.

Note that, the $\beta$-OH value indicating the amount of water in the glass can be determined using the following equation.

$$\beta\text{-OH} = (1/t) \times \log_{10}(T_1/T_2)$$

t: thickness (mm) of glass
$T_1$: transmittance (%) at reference wavelength of 3846 $cm^{-1}$ (2600 nm)
$T_2$: transmittance (%) at a hydroxy group absorption wavelength of 3600 $cm^{-1}$ (2800 nm)

In the present invention, $T_1$ and $T_2$ are measured using a FT-IR Spectrometer Frontier manufactured by PerkinElmer.

Examples of a method for decreasing the β-OH value of the glass for a pharmaceutical container and the glass tube for a pharmaceutical container according to the present invention include the following methods. (1) Selecting a raw material having a low water content. For example, anhydrous borax containing no moisture is used as the raw material of $B_2O_3$. (2) In melting the glass, the glass is heated by an electrode, a heater, or the like. (3) Adding a component ($MoO_3$ or the like) for decreasing the β-OH to the glass.

The liquidus viscosity of the glass for a pharmaceutical container according to the present invention is preferably 4.0 or more, 4.3 or more, 4.5 or more, 4.8 or more, 5.1 or more, 5.3 or more, and particularly preferably 5.5 or more, in terms of a log η value. When the liquidus viscosity is too low, the devitrification resistance decreases, and it is difficult to prepare a glass tube by using the Danner process or the like.

The glass for a pharmaceutical container and the glass tube for a pharmaceutical container according to the present invention preferably have a thermal expansion coefficient at 20°C to 300°C of $40 \times 10^{-7}/°C$ to $60 \times 10^{-7}/°C$. The thermal expansion coefficient is more preferably $50 \times 10^{-7}/°C$ to $58 \times 10^{-7}/°C$, still more preferably $51 \times 10^{-7}/°C$ to $55 \times 10^{-7}/°C$, and most preferably $51 \times 10^{-7}/°C$ to $53 \times 10^{-7}/°C$. When the thermal expansion coefficient is smaller than $40 \times 10^{-7}/°C$, the viscosity of the glass tends to increase, and the melting temperature or the forming temperature increases, making it difficult to manufacture the glass. In addition, when the thermal expansion coefficient is larger than $60 \times 10^{-7}/°C$, the glass is more likely to be damaged by thermal shock in a glass manufacturing step, a processing step, a sterilization step, or the like.

Next, a method for producing the glass for a pharmaceutical container and the glass tube for a pharmaceutical container according to the present invention will be described. Note that, the method for manufacturing a glass tube for a pharmaceutical container described below is the Danner process.

First, glass raw materials are mixed so as to have the above glass composition to prepare a glass batch. Next, the glass batch is continuously put into a melting kiln at 1550°C to 1700°C, melted, and fined, then the obtained molten glass is wound around a rotating refractory, and air is blown out from a tip portion of the refractory to draw out the glass in a tubular shape from the tip portion.

Subsequently, the drawn-out tubular glass is cut into a predetermined length to obtain a glass tube for a pharmaceutical container. The glass tube thus obtained is used for manufacturing a vial or an ampoule.

Note that, the glass tube for a pharmaceutical container according to the present invention is not limited to being manufactured by the Danner process, and may be manufactured by using any known method. For example, a Vello process or a down-draw process is effective as a method for manufacturing the glass tube for a pharmaceutical container according to the present invention.

In addition, the container may be formed directly from the glass melt by using a forming method such as blowing. The containers formed by these methods are suitable as pharmaceutical containers for oral and parenteral pharmaceutical, and storage containers for beverages, cosmetics, and the like.

The glass for a pharmaceutical container and the glass tube for a pharmaceutical container according to the present invention may form a compression stress on the surface by an ion exchange treatment. By forming the compression stress on the glass surface, it is possible to reduce breakage of the glass due to falling-off or collision with other objects. Conditions for the ion exchange treatment are not particularly limited, and optimum conditions may be selected in consideration of the viscosity properties, the application, the thickness, the internal tensile stress, the dimensional change, or the like of the glass. In particular, when K ions in a KNO3 molten salt are exchanged with a Na component in the glass, a compression stress layer can be efficiently formed on the surface.

The number of times the ion exchange treatment is performed is not particularly limited, and the treatment may be performed once or a plurality of times. When the number of the ion exchange treatment is one, the manufacturing cost of the glass for a pharmaceutical container can be reduced. In the case of performing the ion exchange treatment a plurality of times, the number of times of the ion exchange treatment is preferably two. In this way, the total amount of the tensile stress accumulated inside the glass can be reduced while increasing the stress depth.

The glass for a pharmaceutical container and the glass tube for a pharmaceutical container according to the present invention may be etched with an acidic solution such as hydrofluoric acid or a basic solution. In particular, an inner surface of the container is preferably etched. By performing the etching treatment, it is possible to remove scratches, surface roughness, surface heterogeneous layers, and the like generated during the processing of the container, and to reduce the influence thereof.

Examples

Hereinafter, the present invention will be described based on Examples. Note that, the following Examples are merely illustrative. The present invention is not limited to the following Examples in any way.

Tables 1 to 3 show Examples of the present invention (Sample Nos. 1 to 16).

Table 1

| [wt%] | No. 1 | No. 2 | No. 3 | No. 4 | No. 5 | No. 6 |
|---|---|---|---|---|---|---|
| $SiO_2$ | 70.3 | 71.2 | 72.1 | 73.1 | 73.2 | 73.7 |
| $Al_2O_3$ | 8.0 | 7.5 | 7.0 | 6.5 | 6.5 | 6.5 |
| $B_2O_3$ | 12.0 | 11.5 | 11.0 | 10.5 | 10.0 | 9.5 |
| $Li_2O$ | 0.0 | 0.0 | 0.0 | 0.0 | 0.0 | 0.0 |
| $Na_2O$ | 6.9 | 6.4 | 5.9 | 5.4 | 8.0 | 7.0 |
| $K_2O$ | 0.9 | 1.4 | 1.9 | 2.4 | 1.0 | 2.0 |
| $MgO$ | 0.0 | 0.0 | 0.0 | 0.0 | 0.0 | 0.0 |
| $CaO$ | 0.7 | 0.7 | 0.7 | 0.7 | 1.0 | 1.0 |
| $SrO$ | 0.0 | 0.0 | 0.0 | 0.0 | 0.0 | 0.0 |
| $BaO$ | 1.2 | 1.2 | 1.2 | 1.2 | 0.1 | 0.1 |
| $ZrO_2$ | 0.0 | 0.0 | 0.0 | 0.0 | 0.0 | 0.0 |
| $F$ | 0.0 | 0.0 | 0.0 | 0.0 | 0.0 | 0.0 |
| $Cl$ | 0.0 | 0.1 | 0.1 | 0.1 | 0.1 | 0.1 |
| $Sb_2O3$ | 0.010 | 0.005 | 0.001 | 0.013 | 0.008 | 0.016 |
| $As_2O3$ | 0.0 | 0.0 | 0.0 | 0.0 | 0.0 | 0.0 |
| $Fe_2O_3$ | 0.008 | 0.014 | 0.017 | 0.010 | 0.016 | 0.015 |
| $TiO_2$ | 0.007 | 0.020 | 0.025 | 0.017 | 0.041 | 0.055 |
| $MoO_3$ | 0.00001 | 0.00004 | 0.00013 | 0.00022 | 0.00044 | 0.001 |
| $SnO_2$ | 0.0 | 0.0 | 0.0 | 0.0 | 0.0 | 0.0 |
| $CeO_2$ | 0.0 | 0.0 | 0.0 | 0.0 | 0.0 | 0.0 |
| $Li_2O+Na_2O+K_2O$ ($R_2O$) | 7.8 | 7.8 | 7.8 | 7.8 | 9.0 | 9.0 |
| $100 \times MoO_3/R_2O$ | 0.00013 | 0.00051 | 0.00167 | 0.00282 | 0.00489 | 0.01111 |
| $MgO+CaO+SrO+BaO$ ($R'O$) | 1.9 | 1.9 | 1.9 | 1.9 | 1.1 | 1.1 |
| $R_2O/R'O$ | 4.1 | 4.1 | 4.1 | 4.0 | 8.2 | 8.2 |
| $CaO+BaO$ | 1.9 | 1.9 | 1.9 | 1.9 | 1.1 | 1.1 |
| $CaO/BaO$ | 0.6 | 0.6 | 0.6 | 0.6 | 10.0 | 10.0 |

(continued)

| [wt%] | No. 1 | No. 2 | No. 3 | No. 4 | No. 5 | No. 6 |
|---|---|---|---|---|---|---|
| $(R_2O+R'O-Al_2O_3)/(SiO_2+Al_2O_3+B_2O_3)$ | 0.019 | 0.024 | 0.030 | 0.036 | 0.040 | 0.040 |
| $MoO_3/(Fe_2O_3+TiO_2)$ | 0.0007 | 0.0012 | 0.0031 | 0.0081 | 0.0077 | 0.0143 |
| $Fe_2O_3+TiO_2+MoO_3+SnO_2+CeO_2$ | 0.01501 | 0.03404 | 0.04213 | 0.02722 | 0.05744 | 0.071 |
| $F+Cl+Sb_2O_3+As_2O_3+SnO_2+CeO_2$ | 0.010 | 0.105 | 0.101 | 0.113 | 0.108 | 0.116 |
| Transparency | Transparent | Transparent | Transparent | Transparent | Transparent | Transparent |
| Transmittance [%] | N.A. | N.A. | 92 | N.A. | N.A. | N.A. |
| Ps [°C] | N.A. | N.A. | 528 | N.A. | N.A. | N.A. |
| Ta [°C] | N.A. | N.A. | 571 | N.A. | N.A. | N.A. |
| Ts [°C] | N.A. | N.A. | 786 | N.A. | N.A. | N.A. |
| Working temperature ($10^{4.0}$ dPa·s) [°C] | N.A. | N.A. | 1174 | N.A. | N.A. | N.A. |
| $10^{2.5}$ dPa·s [°C] | N.A. | N.A. | 1636 | N.A. | N.A. | N.A. |
| Hydrolytic resistance test [$\mu$g/g] | N.A. | N.A. | 19.2 | N.A. | N.A. | N.A. |
| Alkali resistance test (ISO 695) [mg/dm$^2$] | N.A. | N.A. | N.A. | N.A. | N.A. | N.A. |
| $\beta$-OH | N.A. | N.A. | 0.49 | N.A. | N.A. | N.A. |
| Liquidus temperature [°C] | N.A. | N.A. | 912 | N.A. | N.A. | N.A. |
| log $\eta$ | N.A. | N.A. | 6.0 | N.A. | N.A. | N.A. |
| Thermal expansion coefficient (20°C to 300°C) | N.A. | N.A. | N.A. | N.A. | N.A. | N.A. |

Table 2

| [wt%] | No. 7 | No. 8 | No. 9 | No. 10 | No. 11 | No. 12 |
|---|---|---|---|---|---|---|
| $SiO_2$ | 74.2 | 73.2 | 73.0 | 72.0 | 72.2 | 75.9 |
| $Al_2O_3$ | 6.5 | 7.0 | 7.0 | 7.0 | 7.0 | 6.5 |
| $B_2O_3$ | 9.0 | 11.0 | 11.0 | 11.0 | 11.0 | 9.0 |
| $Li_2O$ | 0.0 | 0.0 | 0.0 | 0.0 | 0.0 | 0.1 |
| $Na_2O$ | 6.0 | 6.0 | 6.5 | 7.4 | 5.0 | 7.6 |
| $K_2O$ | 3.0 | 2.0 | 2.0 | 0.1 | 3.0 | 0.1 |
| $MgO$ | 0.0 | 0.0 | 0.0 | 0.0 | 0.0 | 0.1 |
| $CaO$ | 1.0 | 0.1 | 0.1 | 1.0 | 0.5 | 0.1 |
| $SrO$ | 0.0 | 0.0 | 0.0 | 0.0 | 0.0 | 0.1 |
| $BaO$ | 0.1 | 0.5 | 0.1 | 1.2 | 1.0 | 0.1 |
| $ZrO_2$ | 0.0 | 0.0 | 0.0 | 0.0 | 0.0 | 0.1 |
| $F$ | 0.0 | 0.0 | 0.1 | 0.0 | 0.0 | 0.0 |
| $Cl$ | 0.1 | 0.1 | 0.0 | 0.1 | 0.1 | 0.1 |
| $Sb_2O3$ | 0.021 | 0.033 | 0.042 | 0.050 | 0.015 | 0.017 |
| $As_2O3$ | 0.0 | 0.0 | 0.1 | 0.0 | 0.0 | 0.0 |
| $Fe_2O_3$ | 0.014 | 0.017 | 0.010 | 0.016 | 0.065 | 0.043 |
| $TiO_2$ | 0.020 | 0.033 | 0.066 | 0.083 | 0.027 | 0.023 |
| $MoO_3$ | 0.002 | 0.00001 | 0.00004 | 0.00013 | 0.00004 | 0.1 |
| $SnO_2$ | 0.0 | 0.0 | 0.0 | 0.0 | 0.1 | 0.0 |
| $CeO_2$ | 0.0 | 0.0 | 0.0 | 0.1 | 0.0 | 0.0 |
| $Li_2O+Na_2O+K_2O$ ($R_2O$) | 9.0 | 8.0 | 8.5 | 7.5 | 8.0 | 7.8 |
| $100×MoO_3/R_2O$ | 0.02222 | 0.00013 | 0.00047 | 0.00173 | 0.00050 | 1.28205 |
| $MgO+CaO+SrO+BaO$ ($R'O$) | 1.1 | 0.6 | 0.2 | 2.2 | 1.5 | 0.4 |
| $R_2O/R'O$ | 8.2 | 13.3 | 42.5 | 3.4 | 5.3 | 19.5 |
| $CaO+BaO$ | 1.1 | 0.6 | 0.2 | 2.2 | 1.5 | 0.2 |
| $CaO/BaO$ | 10.0 | 0.2 | 1.0 | 0.8 | 0.5 | 1.0 |

| [wt%] | No. 7 | No. 8 | No. 9 | No. 10 | No. 11 | No. 12 |
|---|---|---|---|---|---|---|
| $(R_2O+R'O-Al_2O_3)/(SiO_2+Al_2O_3+B_2O_3)$ | 0.040 | 0.018 | 0.019 | 0.030 | 0.028 | 0.019 |
| $MoO_3/(Fe_2O_3+TiO_2)$ | 0.0588 | 0.0002 | 0.0005 | 0.0013 | 0.0004 | 1.5152 |
| $Fe_2O_3+TiO_2+MoO_3+SnO_2+CeO_2$ | 0.036 | 0.05 | 0.076 | 0.199 | 0.192 | 0.166 |
| $F+Cl+Sb_2O_3+As_2O_3+SnO_2+CeO_2$ | 0.121 | 0.133 | 0.242 | 0.250 | 0.215 | 0.117 |
| Transparency | Transparent | Transparent | Transparent | Transparent | Transparent | Transparent |
| Transmittance [%] | N.A. | N.A. | N.A. | N.A. | N.A. | N.A. |
| Ps [°C] | N.A. | N.A. | N.A. | N.A. | N.A. | N.A. |
| Ta [°C] | N.A. | N.A. | N.A. | N.A. | N.A. | N.A. |
| Ts [°C] | N.A. | N.A. | N.A. | N.A. | N.A. | N.A. |
| Working temperature ($10^{4.0}$ dPa·s) [°C] | N.A. | N.A. | N.A. | N.A. | N.A. | N.A. |
| $10^{2.5}$ dPa·s [°C] | N.A. | N.A. | N.A. | N.A. | N.A. | N.A. |
| Hydrolytic resistance test [μg/g] | N.A. | N.A. | N.A. | N.A. | N.A. | N.A. |
| Alkali resistance test (ISO 695) [$mg/dm^2$] | N.A. | N.A. | N.A. | N.A. | N.A. | N.A. |
| β-OH | N.A. | N.A. | N.A. | N.A. | N.A. | N.A. |
| Liquidus temperature [°C] | N.A. | N.A. | N.A. | N.A. | N.A. | N.A. |
| log η | N.A. | N.A. | N.A. | N.A. | N.A. | N.A. |
| Thermal expansion coefficient (20°C to 300°C) | N.A. | N.A. | N.A. | N.A. | N.A. | N.A. |

Table 3

| [wt%] | No. 13 | No. 14 | No. 15 | No. 16 |
|---|---|---|---|---|
| $SiO_2$ | 73.3 | 75.3 | 73.2 | 75.1 |
| $Al_2O_3$ | 6.9 | 5.4 | 6.4 | 6.0 |
| $B_2O_3$ | 11.1 | 10.8 | 11.0 | 10.5 |
| $Li_2O$ | 0.0 | 0.0 | 0.0 | 0.0 |
| $Na_2O$ | 7.2 | 6.9 | 6.6 | 6.7 |
| $K_2O$ | 0.7 | 0.0 | 1.6 | 0.7 |
| $MgO$ | 0.0 | 0.0 | 0.0 | 0.0 |
| $CaO$ | 0.6 | 1.3 | 1.0 | 0.5 |
| $SrO$ | 0.0 | 0.0 | 0.0 | 0.0 |
| $BaO$ | 0.0 | 0.0 | 0.0 | 0.0 |
| $ZrO_2$ | 0.0 | 0.0 | 0.0 | 0.0 |
| $F$ | 0.0 | 0.2 | 0.0 | 0.2 |
| $Cl$ | 0.1 | 0.0 | 0.1 | 0.2 |
| $Sb_2O3$ | 0.001 | 0.001 | 0.001 | 0.001 |
| $As_2O3$ | 0.0 | 0.0 | 0.0 | 0.0 |
| $Fe_2O_3$ | 0.015 | 0.016 | 0.019 | 0.016 |
| $TiO_2$ | 0.009 | 0.025 | 0.009 | 0.014 |
| $MoO_3$ | 0.0001 | 0.0002 | 0.0006 | 0.0009 |
| $SnO_2$ | 0.0 | 0.0 | 0.0 | 0.0 |
| $CeO_2$ | 0.0 | 0.0 | 0.0 | 0.0 |
| $Li_2O+Na_2O+K_2O\ (R_2O)$ | 7.9 | 6.9 | 8.2 | 7.4 |
| $100{\times}MoO_3/R_2O$ | 0.00127 | 0.00290 | 0.00732 | 0.01216 |
| $MgO+CaO+SrO+BaO\ (R'O)$ | 0.6 | 1.3 | 1.0 | 0.5 |
| $R_2O/R'O$ | 13.2 | 5.3 | 8.2 | 14.8 |
| $CaO+BaO$ | 0.6 | 1.3 | 1.0 | 0.5 |
| $CaO/BaO$ | - | - | - | - |
| $(R_2O+R'O-Al_2O_3)/(SiO_2+Al_2O_3+B_2O_3)$ | 0.018 | 0.031 | 0.031 | 0.021 |
| $MoO_3/(Fe_2O_3+TiO_2)$ | 0.0042 | 0.0049 | 0.0214 | 0.0300 |
| $Fe_2O_3+TiO_2+MoO_3+SnO_2+CeO_2$ | 0.0241 | 0.0412 | 0.0286 | 0.0309 |
| $F+Cl+Sb_2O_3+As_2O_3+SnO_2+CeO_2$ | 0.101 | 0.201 | 0.101 | 0.401 |
| Transparency | Transparent | Transparent | Transparent | Transparent |
| Transmittance [%] | N.A. | N.A. | N.A. | N.A. |
| Ps [°C] | 511 | 522 | 525 | 517 |
| Ta [°C] | 556 | 564 | 567 | 562 |
| Ts [°C] | 778 | 777 | 777 | 787 |
| Working temperature ($10^{4.0}$ dPa·s) [°C] | 1165 | 1152 | 1144 | 1177 |
| $10^{2.5}$ dPa·s [°C] | 1596 | 1554 | 1541 | 1592 |
| Hydrolytic resistance test [μg/g] | 19 | 22 | 19 | 16 |
| Alkali resistance test (ISO 695) [mg/dm$^2$] | 141 | 115 | N.A. | N.A. |

(continued)

| [wt%] | No. 13 | No. 14 | No. 15 | No. 16 |
|---|---|---|---|---|
| β-OH | 0.59 | N.A. | N.A. | N.A. |
| Liquidus temperature [°C] | 942.0 | N.A. | N.A. | N.A. |
| log η | 5.6 | N.A. | N.A. | N.A. |
| Thermal expansion coefficient (20°C to 300°C) | 51.7 | 48.5 | 53.6 | 49.0 |

Each sample in the tables was prepared as follows. First, a 550 g batch was mixed to have the glass composition shown in the tables, and melted in a platinum crucible at 1600°C for 18 hours. Note that, in order to improve the homogeneity of the sample, stirring was carried out twice during the melting process. Thereafter, in order to reduce bubbles in the glass, melting was performed at 1650°C for 2 hours. Thereafter, the molten glass was poured out to prepare an ingot, which was processed into a shape necessary for measurement and subjected to various evaluations. The results are shown in the tables.

The transparency of the prepared ingot was visually determined from two levels of transparent and colored. As a criterion, when characters were viewed through the sample, the sample was determined as transparent in the case where the characters were clearly visible, and as colored in the case where the characters were not clearly visible.

For the transmittance, the glass was processed into a sheet of 30 mm × 30 mm × 1 mm and the surface was mirror-finished to prepare a measurement sample. The measurement was performed using a spectrophotometer (V-670 manufactured by JASCO Corporation) with a measurement wavelength range of 380 nm to 760 nm, a bandwidth of 5 nm, a medium response, a scanning speed of 200 nm, and a data acquisition interval of 1 nm. In the tables, the smallest transmittance value in the wavelength range of 380 nm to 760 nm is shown.

The strain point Ps was determined by using a fiber drawing method according to ASTM C336. The annealing point Ta and the softening point Ts were determined by using a fiber drawing method according to ASTM C388.

The working temperature (the temperature at which the viscosity of the glass is $10^{4.0}$ dPa·s) and the temperature at which the viscosity of the glass is $10^{2.5}$ dPa·s were determined by using a platinum sphere pull up method.

The hydrolytic resistance test was performed by a hydrolytic resistance test (washing with acetone) according to ISO720. Note that, the detailed test procedure is as described above.

The liquidus temperature was determined by filling a platinum boat of approximately 120 mm × 20 mm × 10 mm with a ground glass, charging it into an electric furnace having a linear temperature gradient for 24 hours, then identifying crystal precipitation sites by observation using a microscope, and determining the temperature corresponding to the crystal precipitation site from a temperature gradient graph of the electric furnace.

The liquidus viscosity log η (η is the viscosity (dpa·s) of the glass at the liquidus temperature) was calculated by determining a viscosity curve of the glass based on the strain point, the annealing point, the softening point, the working temperature, and the Fulcher viscosity formula, and then calculating the viscosity of the glass at the liquidus temperature from this viscosity curve.

The thermal expansion coefficient was measured using a glass sample formed into a rod shape of about 5 mm in diameter × 20 mm, in a temperature range of 20°C to 300°C with a dilatometer.

As is clear from Tables 1 to 3, Example Nos. 1 to 16 have high transparency. In addition, in Example Nos. 3 and 13 to 16, since the chemical durability is high and the strain point Ps, the annealing point Ta, and the softening point Ts are high, it is considered that the devitrification resistance is also high, and in actuality, in Nos. 3 and 13, the liquidus temperature is as low as 942°C or lower.

INDUSTRIAL APPLICABILITY

The glass for a pharmaceutical container and the glass tube for a pharmaceutical container according to the present invention are suitable as a material for a pharmaceutical container such as a tube bottle, for example, a vial or an ampoule, and a syringe for injection.

Claims

1. A glass for a pharmaceutical container comprising, as a glass composition, in mass%, from 65% to 80% of $SiO_2$, from 1% to 10% of $Al_2O_3$, from 5% to 20% of $B_2O_3$, more than 0% to 0.1% of $MoO_3$, from 0% to 10% of MgO+CaO+SrO+BaO, and from 1% to 20% of $Li_2O+Na_2O+K_2O$.

2. The glass for a pharmaceutical container according to claim 1, wherein a content of $Na_2O$ is from 5% to 9% and a content of $K_2O$ is from 0.1% to 3%.

3. The glass for a pharmaceutical container according to claim 2, wherein a content of CaO is from 0.1% to 2% and a content of BaO is from 0.1% to less than 1.3%.

4. The glass for a pharmaceutical container according to claim 2 or 3, wherein MgO+CaO+SrO+BaO is from 0.2% to 10%, and a content ratio $(Li_2O+Na2O+K_2O)/(MgO+CaO+SrO+BaO)$ is from 3 to 10.

5. The glass for a pharmaceutical container according to claim 2 or 3, wherein a content of $Fe_2O_3$ is from 0.001% to 0.05%, a content of $TiO_2$ is from 0.001% to 0.05%, a content ratio $MoO_3/(Fe_2O_3+TiO_2)$ is from 0.0001 to 0.1, and a visible light transmittance at a thickness of 1 mm is 80% or more.

6. The glass for a pharmaceutical container according to claim 2 or 3, wherein $F+Cl+Sb_2O_3+As_2O_3+SnO_2+CeO_2$ is from 0.01% to 0.5%.

7. The glass for a pharmaceutical container according to claim 2 or 3, wherein $Fe_2O_3+TiO_2+MoO_3+SnO_2+CeO_2$ is 0.5% or less, and a visible light transmittance at a thickness of 1 mm is 85% or more.

8. The glass for a pharmaceutical container according to claim 2 or 3, wherein a content of $Li_2O$ is from 0% to 0.1%, a content of MgO is from 0% to 0.1%, a content of SrO is from 0% to 0.1%, $Li_2O+Na_2O+K_2O$ is from 5.1% to 12.1%, and MgO+CaO+SrO+BaO is from 0.2% to less than 2.5%.

9. The glass for a pharmaceutical container according to claim 2 or 3, wherein a thermal expansion coefficient at 20°C to 300°C is $40 \times 10^{-7}/°C$ to $60 \times 10^{-7}/°C$.

10. A glass for a pharmaceutical container, comprising, as a glass composition, in mass%, from 68% to 77% of $SiO_2$, from 6.5% to 8% of $Al_2O_3$, from 9% to 12% of $B_2O_3$, more than 0% to 0.1% of $MoO_3$, from 0.1% to 2% of CaO, from 0.1% to less than 1.3% of BaO, from 0.2% to less than 2.5% of MgO+CaO+SrO+BaO, from 5% to 9% of $Na_2O$, from 0.1% to 3% of $K_2O$, from 5.1% to 12.1% of $Li_2O+Na_2O+K_2O$, from 0.001% to 0.05% of $Fe_2O_3$, from 0.001% to 0.05% of $TiO_2$, and from 0.01% to 0.5% of $F+Cl+Sb_2O_3+As_2O_3+SnO_2+CeO_2$, wherein a content ratio $MoO_3/(Fe_2O_3+TiO_2)$ is from 0.0001 to 0.1.

11. The glass for a pharmaceutical container according to claim 10, wherein a content of Cl is from 0.001% to 0.1% and a content of $Sb_2O_3$ is from 0.001% to 0.05%.

12. A glass tube for a pharmaceutical container, comprising, as a glass composition, in mass%, from 68% to 77% of $SiO_2$, from 6.5% to 8% of $Al_2O_3$, from 9% to 12% of $B_2O_3$, from 0.1% to 2% of CaO, from 0.1% to less than 1.3% of BaO, more than 0% to 0.1% of $MoO_3$, from 0.2% to less than 2.5% of MgO+CaO+SrO+BaO, from 5% to 9% of $Na_2O$, from 0.1% to 3% of $K_2O$, from 5.1% to 12.1% of $Li_2O+Na_2O+K_2O$, from 0.001% to 0.05% of $Fe_2O_3$, from 0.001% to 0.05% of $TiO_2$, and from 0.01% to 0.5% of $F+Cl+Sb_2O_3+As_2O_3+SnO_2+CeO_2$, wherein a content ratio $MoO_3/(Fe_2O_3+TiO_2)$ is from 0.0001 to 0.1.

13. The glass tube for a pharmaceutical container according to claim 12, wherein a content of Cl is from 0.001% to 0.1% and a content of $Sb_2O_3$ is from 0.001% to 0.05%.

## INTERNATIONAL SEARCH REPORT

| International application No. |
|---|
| **PCT/JP2024/003433** |

**A. CLASSIFICATION OF SUBJECT MATTER**

*C03C 3/091*(2006.01)i; *A61J 1/05*(2006.01)i; *C03C 4/20*(2006.01)i
FI: C03C3/091; C03C4/20; A61J1/05 311

According to International Patent Classification (IPC) or to both national classification and IPC

**B. FIELDS SEARCHED**

Minimum documentation searched (classification system followed by classification symbols)

C03C1/00-14/00; A61J1/05

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| A | WO 2022/075171 A1 (NIPPON ELECTRIC GLASS CO.) 14 April 2022 (2022-04-14) entire text, all drawings | 1-13 |
| A | JP 08-067529 A (JENA GRASBARG GMBH) 12 March 1996 (1996-03-12) entire text | 1-13 |
| A | JP 2014-114204 A (SCHOTT AG) 26 June 2014 (2014-06-26) entire text, all drawings | 1-13 |
| A | JP 2004-091308 A (NIPPON ELECTRIC GLASS CO.) 25 March 2004 (2004-03-25) entire text | 1-13 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/003433**

| Patent document<br>cited in search report | Publication date<br>(day/month/year) | Patent family member(s) | Publication date<br>(day/month/year) |
|---|---|---|---|
| WO 2022/075171 A1 | 14 April 2022 | EP 4227274 A1<br>entire text, all drawings<br>CN 116322598 A | |
| JP 08-067529 A | 12 March 1996 | US 5599753 A<br>entire text<br>EP 699636 A1 | |
| JP 2014-114204 A | 26 June 2014 | US 2014/0117294 A1<br>entire text, all drawings<br>DE 102012219614 B3<br>CN 103787577 A | |
| JP 2004-091308 A | 25 March 2004 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014237562 A

- WO 2019078188 A